# EUROPEAN PATENT APPLICATION

(11) **EP 4 807 048 A1**
(43) Date of publication of application: **16.09.2026**
(21) Application number: 23958270.3
(22) Date of filing: 08.11.2023
(51) Int. Cl.: C25B 15/02, C25B 1/042, C25B 15/08

(54) **ELECTROLYSIS CELL SYSTEM AND METHOD FOR CONTROLLING SAME**

(71) Applicant: Ceres Power Limited, Horsham, West Sussex RH13 5PX (GB)
(72) Inventor: AKIYAMA, Naoya, Nagoya-shi, Aichi 467-8530 (JP); NAKAMURA, Toshiyuki, Nagoya-shi, Aichi 467-8530 (JP); OHMORI, Makoto, Nagoya-shi, Aichi 467-8530 (JP)
(74) Representative: Haseltine Lake Kempner LLP
(86) International application number: PCT/JP2023/040257
(87) International publication number: WO 2025/099868

(57) **Abstract**

Provided is an electrolytic cell system comprising an electrolytic cell, a first supply line, a second supply line, a first pressure adjusting unit, a second pressure adjusting unit, and a controller. The electrolytic cell has a hydrogen electrode chamber and an oxygen electrode chamber. The first supply line supplies a feedstock gas containing water vapor to the hydrogen electrode chamber. The second supply line supplies compressed air to the oxygen electrode chamber. The first pressure adjusting unit is provided in the first supply line. The second pressure adjusting unit is provided in the second supply line. The controller adjusts a first pressure in the hydrogen electrode chamber and a second pressure in the oxygen electrode chamber by controlling the first pressure adjusting unit and the second pressure adjusting unit.

## Description

### Technical Field

The present invention relates to an electrolytic cell system and a method for controlling the same.

### Background Art

There are electrolytic cells that produce hydrogen through electrolysis of water vapor (see, for example, Patent Document 1).

These electrolytic cells comprise a hydrogen electrode chamber in which a hydrogen electrode is disposed, an oxygen electrode chamber in which an oxygen electrode is disposed, and an electrolyte disposed between the hydrogen electrode and the oxygen electrode.

Feedstock gas containing water vapor is supplied to the hydrogen electrode chamber. In the hydrogen electrode chamber, hydrogen and oxygen ions are generated from the water vapor. In the oxygen electrode chamber, oxygen is generated from oxygen ions supplied via the electrolyte.

### Cited Literature

### Patent Literature

Patent Document 1: JP 2022-143131 A

### Summary of Invention

### Technical Problem

Increasing the pressure inside the hydrogen electrode chamber is an effective way to improve hydrogen production efficiency in an electrolytic cell. However, increasing the pressure inside the hydrogen electrode chamber may cause the electrolyte to become warped.

An object of the present invention is to provide an electrolytic cell system capable of suppressing electrolyte warping, and a control method therefor.

### Solution to Problem

The first aspect of the present invention is an electrolytic cell system comprising an electrolytic cell and a controller. The electrolytic cell has a hydrogen electrode chamber into which feedstock gas containing water vapor is supplied, an oxygen electrode chamber in which oxygen is generated, and an electrolyte disposed between the hydrogen electrode chamber and the oxygen electrode chamber. The controller adjusts the pressure difference between the first pressure in the hydrogen electrode chamber and the second pressure in the oxygen electrode chamber to a value below a predetermined value.

The second aspect of the present invention is an electrolytic cell system related to the first aspect, further comprising a first supply line that supplies the feedstock gas to the hydrogen electrode chamber, a second supply line that supplies compressed air to the oxygen electrode chamber, a first pressure adjusting unit provided in the first supply line that regulates the pressure of the feedstock gas supplied to the hydrogen electrode chamber, and a second pressure adjusting unit provided in the second supply line that regulates the pressure of the air supplied to the oxygen electrode chamber. The controller adjusts the pressure difference to a value at or below a predetermined value by controlling the first pressure adjusting unit and the second pressure adjusting unit.

The third aspect of the present invention is an electrolytic cell system related to the first aspect, further comprising a first supply line that supplies the raw material gas to the hydrogen electrode chamber, a first pressure adjusting unit provided in the first supply line that regulates the pressure of the feedstock gas supplied to the hydrogen electrode chamber, a first discharge line that discharges hydrogen - containing exhaust gas from the hydrogen electrode chamber, a second discharge line that discharges oxygen-containing exhaust gas from the oxygen electrode chamber, and a backpressure adjusting unit provided in the second discharge line to adjust the backpressure of the oxygen-containing exhaust gas discharged from the oxygen electrode chamber. The controller adjusts the pressure difference to a value at or below a predetermined value by controlling the first pressure adjusting unit and the backpressure adjusting unit.

The fourth aspect of the present invention is an electrolytic cell system related to the first aspect, further comprising a first supply line for supplying the feedstock gas to the hydrogen electrode chamber, a pressure gauge that measures the pressure of the feedstock gas flowing through the first supply line, a first discharge line that discharges hydrogen-containing exhaust gas from the hydrogen electrode chamber, a second discharge line that discharges oxygen-containing exhaust gas from the oxygen electrode chamber, and
a backpressure adjusting unit provided in the second discharge line that adjusts the backpressure of the oxygen-containing exhaust gas discharged from the oxygen electrode chamber. The controller adjusts the pressure difference to a value at or below a predetermined value by controlling the backpressure adjusting unit based on measurement values from the pressure gauge.

The fifth aspect of the present invention is an electrolytic cell system related to any of the first to fourth aspects, wherein the predetermined value is 1.5 atm.

The sixth aspect of the present invention is an electrolytic cell system related to the first through fifth aspect, wherein the electrolytic cell comprises a metal support having a plurality of through-holes formed in a main surface, and a cell main unit disposed on the main surface. The cell main unit comprises a hydrogen electrode and an oxygen electrode disposed on the main surface, an electrolyte disposed between the hydrogen electrode and the oxygen electrode, and a current collector disposed on the oxygen electrode.

The seventh aspect of the present invention is an electrolytic cell system related to the sixth aspect, wherein the controller sets the second pressure higher than the first pressure.

The eighth aspect of the present invention is an electrolytic cell system related to the second aspect, further comprising a first discharge line for discharging hydrogen-containing discharge gas from the hydrogen electrode chamber, and a high-pressure reactor connected to the first discharge line and supplied with the hydrogen-containing discharge gas.

The ninth aspect of the present invention is an electrolytic cell system related to the second aspect, further comprising a first discharge line for discharging hydrogen-containing discharge gas from the hydrogen electrode chamber, and a backpressure adjusting unit provided in the first discharge line for adjusting the backpressure of the hydrogen-containing discharge gas discharged from the hydrogen electrode chamber.

The tenth aspect of the present invention is an electrolytic cell system related to the second aspect, further comprising a second discharge line that discharges oxygen-containing discharge gas from the oxygen electrode chamber, and a backpressure adjusting unit provided in the second discharge line that adjusts the backpressure of the oxygen-containing discharge gas discharged from the oxygen electrode chamber.

The eleventh aspect of the present invention is an electrolytic cell system related to the third or fourth aspect, further comprising a high-pressure reactor connected to the first discharge line and supplied with the hydrogen-containing discharge gas.

The twelfth aspect of the present invention is an electrolytic cell system related to the third or fourth aspect, further comprising a second supply line for supplying compressed air to the oxygen electrode chamber.

The thirteenth aspect of the present invention is a method for controlling an electrolytic cell system comprising an electrolytic cell having a hydrogen electrode chamber into which feedstock gas containing water vapor is supplied, an oxygen electrode chamber in which oxygen is generated, and an electrolyte disposed between the hydrogen electrode chamber and the oxygen electrode chamber, the method comprising the step of adjusting the pressure difference between the first pressure in the hydrogen electrode chamber and the second pressure in the oxygen electrode chamber to a value at or below a predetermined value.

### Effect of the Invention

The present invention provides an electrolytic cell system capable of suppressing electrolyte warping, and a control method therefor.

### Brief Description of the Drawings

[FIG. 1]

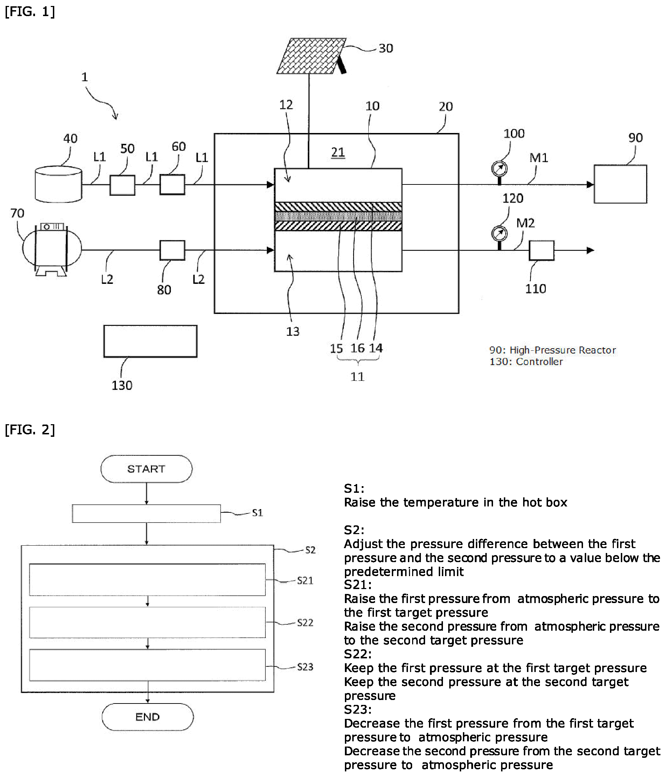

   FIG. 1 is a block diagram showing the electrolytic cell system in the first embodiment.
[FIG. 2]
   FIG. 2 is a flowchart showing a control method for the electrolytic cell system in the first embodiment.
[FIG. 3]

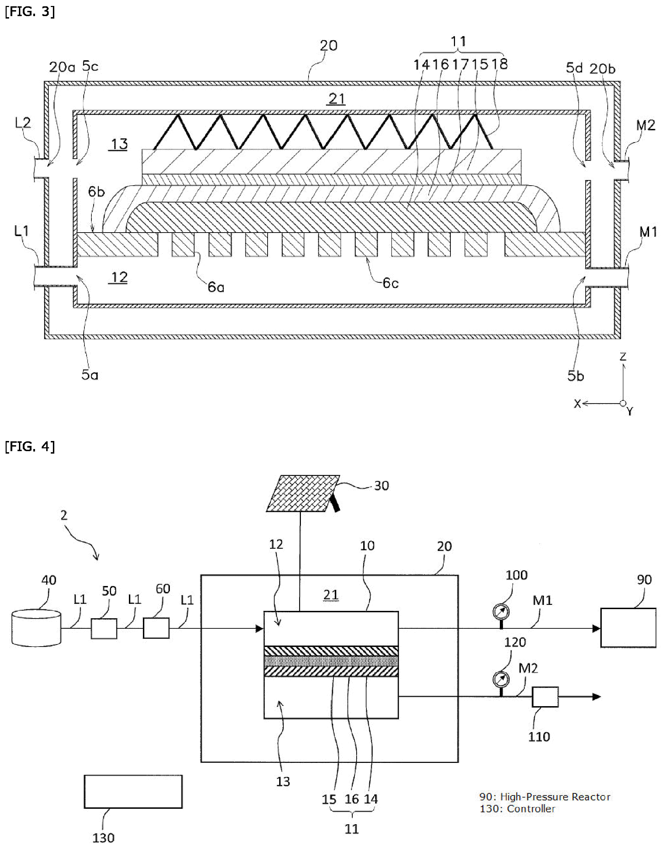

   FIG. 3 is a cross-sectional view showing the configuration of a metal support type electrolytic cell.
[FIG. 4]
   FIG. 4 is a block diagram showing the electrolytic cell system in the second embodiment.
[FIG. 5]

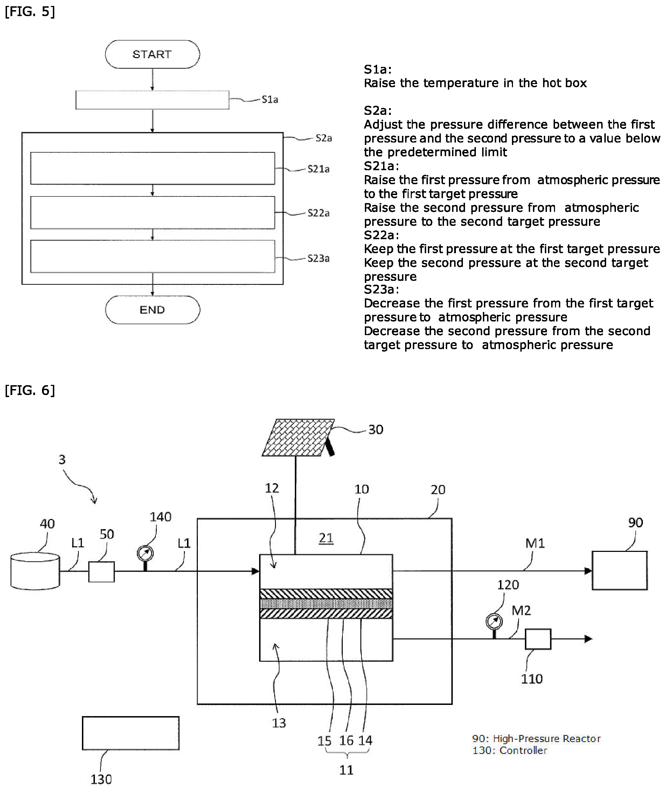

   FIG. 5 is a flowchart showing a control method for the electrolytic cell system in the second embodiment.
[FIG. 6]
   FIG. 6 is a block diagram showing the electrolytic cell system in the third embodiment.
[FIG. 7]

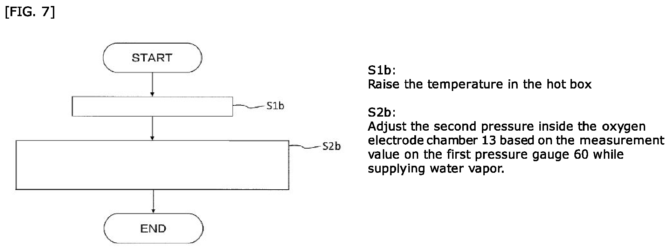

   FIG. 7 is a flowchart showing a control method for an electrolytic cell system in the third embodiment.

### Description of Embodiments

### 1. First Embodiment

### (Electrolytic System 1)

FIG. 1 is a block diagram showing the electrolytic cell system 1 in the first embodiment.

This electrolytic cell system 1 has an electrolytic cell 10, a hot box 20, a power supply unit 30, a water storage unit 40, a boiler 50, a first pressure adjusting unit 60, a compressor 70, a second pressure adjusting unit 80, a high-pressure reactor 90, a first pressure gauge 100, a backpressure adjusting unit 110, a second pressure gauge 120, and a controller 130.

The electrolytic cell system 1 has a first supply line L1, a second supply line L2, a first discharge line M1, and a second discharge line M2.

The electrolytic cell 10 is housed inside the hot box 20. The electrolytic cell 10 has a cell main unit 11, a hydrogen electrode chamber 12, and an oxygen electrode chamber 13. The cell main unit 11 may be a single cell, such as a flat plate or cylindrical single cell. The cell main unit 11 may be metal supported, hydrogen electrode supported, or electrolyte supported. The electrolytic cell system 1 may include a cell stack in which electrolytic cells 10 are stacked on top of each other.

The cell main unit 11 includes a hydrogen electrode 14, an oxygen electrode 15, and an electrolyte 16. Power is supplied to the cell main unit 11 from a power supply unit 30.

The hydrogen electrode 14 is disposed inside the hydrogen electrode chamber 12. At the hydrogen electrode 14, the water vapor (H₂O) in the feedstock gas is electrolyzed using the power supplied from the power supply unit 30. The hydrogen electrode 14 generates hydrogen (H₂) and oxygen ions (O²⁻) from the water vapor in the feedstock gas.

The oxygen electrode 15 is disposed inside the oxygen electrode chamber 13. The oxygen electrode 15 generates oxygen (O₂) from oxygen ions supplied from the hydrogen electrode 14 via the electrolyte 16.

The electrolyte 16 is positioned between the hydrogen electrode 14 and the oxygen electrode 15. The electrolyte 16 functions as a gas barrier layer separating the hydrogen electrode chamber 12 and the oxygen electrode chamber 13 from each other.

A feedstock gas containing at least water vapor is supplied to the hydrogen electrode chamber 12. In the hydrogen electrode chamber 12, hydrogen and oxygen ions are generated at the hydrogen electrode 14. Hydrogen-containing discharge gas, which includes hydrogen generated at the hydrogen electrode 14, is discharged from the hydrogen electrode chamber 12. The hydrogen-containing discharge gas may contain water vapor that was not consumed at the hydrogen electrode 14.

Compressed air is supplied to the oxygen electrode chamber 13. In the oxygen electrode chamber 13, oxygen is generated at the oxygen electrode 15. An oxygen-containing discharge gas, containing air supplied to the oxygen electrode chamber 13 and oxygen generated at the oxygen electrode 15, is discharged from the oxygen electrode chamber 13.

The hot box 20 is a housing with thermal insulation and heat storage properties. The hot box 20 has a housing space 21 for accommodating the electrolytic cell 10. The housing space 21 may be connected to either the hydrogen electrode chamber 12 or the oxygen electrode chamber 13. The housing space 21 is heated by heat generated by the cell main unit 11 in the electrolytic cell 10. The cell main unit 11 generates heat due to Joule heating caused by the electrical resistance of the electrolyte 16 and overvoltage at the hydrogen electrode 14 and oxygen electrode 16.

The power supply unit 30 supplies power to the cell main unit 11. The power supply unit 30 may use a power generating device, a generator, a storage battery, etc.

The water storage unit 40 stores water, which serves as the feedstock. The water storage unit 40 is connected to the first supply line L1. The first supply line L1 is a flow conduit for supplying raw gas containing water vapor to the hydrogen electrode chamber 12. The water storage unit 40 may be configured to switch between supplying water and stopping the supply of water.

The boiler 50 is provided in first supply line L1. The boiler 50 is positioned downstream of the water storage unit 40. Water stored in the water storage unit 40 is supplied to the boiler 50. The boiler 50 heats the water to generate water vapor (feedstock gas).

The first pressure adjusting unit 60 is provided in the first supply line L1. The first pressure adjusting unit 60 is located downstream of the boiler 50. The water vapor generated in the boiler 50 is supplied to the first pressure adjusting unit 60. The first pressure adjusting unit 60 adjusts the pressure of the water vapor supplied to the hydrogen electrode chamber 12 via the first supply line L1. The first pressure adjusting unit 60 reduces the pressure of the water vapor generated in the boiler 50 from a first pressure to a second pressure. The water vapor adjusted to the second pressure by the first pressure adjusting unit 60 is supplied to the hydrogen electrode chamber 12 of the electrolytic cell 10 via the first supply line L1. The first pressure adjusting unit 60 may be configured to open or close the first supply line L1. The first pressure adjusting unit 60 may be configured to adjust the size of the opening in the first supply line L1. The first pressure adjusting unit 60 is controlled by the controller 130.

The compressor 70 compresses air. The compressor 70 is connected to the second supply line L2. The second supply line L2 is a flow conduit for supplying compressed air to the oxygen electrode chamber 13.

A second pressure adjusting unit 80 is provided in the second supply line L2. The second pressure adjusting unit 80 is positioned downstream of the compressor 70. Air compressed by the compressor 70 is supplied to the second pressure adjusting unit 80. The second pressure adjusting unit 80 adjusts the pressure of the air supplied to the oxygen electrode chamber 13 via the second supply line L2. The second pressure adjusting unit 80 reduces the pressure of the compressed air from a first pressure to a second pressure. The air adjusted to the second pressure by the second pressure adjusting unit 80 is supplied to the oxygen electrode chamber 13 of the electrolytic cell 10 via the second supply line L2. The second pressure adjusting unit 80 may be configured to open or close the second supply line L2. The second pressure adjusting unit 80 may be configured to adjust the size of the opening in the second supply line L2. The second pressure adjusting unit 80 is controlled by the controller 130.

The high-pressure reactor 90 is connected to a first discharge line M1. The first discharge line M1 is a flow conduit for discharging hydrogen-containing discharge gas from the hydrogen electrode chamber 12. The hydrogen-containing discharge gas discharged from the hydrogen electrode chamber 12 is supplied to the high-pressure reactor 90 via the first discharge line M1. The high-pressure reactor 90 uses the hydrogen-containing discharge gas to synthesize desired organic raw materials such as hydrocarbons and methanol. The fact that the high-pressure reactor 90 is connected to the first discharge line M1 is advantageous because it not only allows for onsite synthesis of organic raw materials but also eliminates the need to separately provide a backpressure adjusting unit in the first discharge line M1. Sources of carbon required for synthesis (such as CO, CO₂, and CH₄) are supplied separately to the high-pressure reactor 90.

The first pressure gauge 100 is positioned in the first discharge line M1. The first pressure gauge 100 measures the pressure of the hydrogen-containing discharge gas flowing through the first discharge line M1.

The backpressure adjusting unit 110 is provided in the second discharge line M2. The second discharge line M2 is a flow conduit for discharging oxygen-containing discharge gas from the oxygen electrode chamber 13. The backpressure adjusting unit 110 adjusts the backpressure of the oxygen-containing discharge gas discharged from the oxygen electrode chamber 13. The backpressure adjusting unit 110 may be configured to open or close the second discharge line M2. The backpressure adjusting unit 110 may be configured to adjust the size of the opening in the second discharge line M2. The backpressure adjusting unit 110 is controlled by the controller 130. The back pressure adjusting unit 110 is preferably provided in the second discharge line M2, as this allows pressure adjustments to be made inside the oxygen electrode chamber 13. However, the electrolytic cell system 1 does not have to include a backpressure adjusting unit 110.

A second pressure gauge 120 is positioned in the second discharge line M2. The second pressure gauge 120 measures the pressure of the oxygen-containing discharge gas flowing through the second discharge line M2.

A controller 130 controls the electrolytic cell system 1. The controller 130 includes a storage unit that stores a control program and a processing unit that executes the control program retrieved from the storage unit.

The controller 130 controls the first pressure adjusting unit 60, the second pressure adjusting unit 80, and the backpressure adjusting unit 110. The controller 130 controls the supply of power and the stopping of the supply of power from power supply unit 30 to the cell main unit 11. The controller 130 acquires the measured values from first pressure gauge 100 and second pressure gauge 120.

The controller 130 can adjust the inside the hydrogen electrode chamber 12 (the "first pressure" below). This enables the first pressure inside the hydrogen electrode chamber 12 to be set to a value suitable for the electrochemical reaction in water electrolysis and to promote efficient generation of hydrogen in the hydrogen electrode chamber 12. Also, by maintaining a high first pressure inside the hydrogen electrode chamber 12, it is possible to eliminate the need to boost the pressure of the hydrogen-containing discharge gas discharged from the hydrogen electrode chamber 12 before supplying it to the high-pressure reactor 90 or to reduce the amount by which the pressure of the hydrogen-containing discharge gas needs to be boosted. As a result, the amount of energy consumed by the electrolytic cell system 1 can be reduced.

The controller 130 can detect the first pressure inside the hydrogen electrode chamber 12 based on the measurement value from first pressure gauge 100. When detecting the first pressure, the controller 130 preferably corrects the measurement value of the first pressure gauge 100 based on the temperature difference with the hydrogen electrode chamber 12 and the pressure loss in the first discharge line M1.

The controller 130 can also adjust the pressure inside the oxygen electrode chamber 13 (the "second pressure" below) by controlling the second pressure adjusting unit 80.

The controller 130 can detect the second pressure inside the oxygen electrode chamber 13 based on the measurement value of the second pressure gauge 120. When detecting the second pressure, the controller 130 preferably corrects the measurement value of the second pressure gauge 120 based on the temperature difference with the oxygen electrode chamber 13 and the pressure loss in the second discharge path M2.

The controller 130 adjusts the pressure difference between the first pressure and the second pressure to a value at or below a predetermined value by controlling the first pressure adjusting unit 60 and the second pressure adjusting unit 80. This suppresses warping of the cell main unit 11 in the direction of the hydrogen electrode chamber 12 or the oxygen electrode chamber 13, thereby preventing damage (such as cracking or chipping) to the electrolyte 16 caused by warping. In particular, since the cell main unit 11 is more susceptible to warping in the metal-supported configurations than in the hydrogen electrode-supported configurations or electrolyte-supported configurations, the effect of suppressing warping is especially beneficial for the metal-supported configurations.

The controller 130 may also adjust the pressure difference between the first pressure and the second pressure to a value at or below a predetermined value by controlling a backpressure adjusting unit 110 in addition to the first pressure adjusting unit 60 and second pressure adjusting unit 80.

The controller 130 preferably keeps the pressure difference between the first pressure and the second pressure to 1.5 atm or less. This reliably prevents damage to the electrolyte 16 when using a well-known cell main unit 11.

During startup of the electrolytic cell 10, the controller 130 preferably raises the first pressure from atmospheric pressure to a first target pressure and raises the second pressure from atmospheric pressure to a second target pressure, while adjusting the pressure difference between the first pressure and the second pressure to a value that is at or below a predetermined value. This suppresses damage to the electrolyte 16 during startup of the electrolytic cell 10. The term "startup of the electrolytic cell 10" refers to the period up to when the electrolytic cell 10 reaches the desired operating temperature range.

The first target pressure may be set by taking into consideration hydrogen generation efficiency in the hydrogen electrode chamber 12 and reduction in the amount of energy consumed by the electrolytic cell system 1. The second target pressure is set so that the pressure difference between the first pressure and the second pressure is at or below a predetermined value. The second target pressure may be the same as the first target pressure, higher than the first target pressure, or lower than the first target pressure. As described below, when the cell main unit 11 has a metal-supported configuration, the second target pressure is preferably higher than the first target pressure.

During steady-state operation of the electrolytic cell 10, the controller 130 preferably keeps the first pressure at the first target pressure and the second pressure at the second target pressure while adjusting the pressure difference between the first pressure and the second pressure to a value at or below a predetermined value. This suppresses damage to the electrolyte 16 during steady-state operation of the electrolytic cell 10. "During steady-state operation of the electrolytic cell 10" refers to the period during which the electrolytic cell 10 remains within the desired operating temperature range.

When the electrolytic cell 10 is shut down, the controller 130 preferably lowers the first pressure from the first target pressure to atmospheric pressure while adjusting the pressure difference between the first pressure and the second pressure to a value at or below the predetermined value and simultaneously raising the second pressure from the second target pressure to atmospheric pressure. This helps prevent damage to the electrolyte 16 when the electrolytic cell 10 is shut down. The term "shutdown of the electrolytic cell 10" refers to the period during which the electrolytic cell 10 cools down from at a temperature within the desired operating temperature range to room temperature.

### (Control Method for the Electrolytic Cell System 1)

Next, the control method for the electrolytic cell system 1 will be described. FIG. 2 is a flowchart showing the control method for the electrolytic cell system 1 in the first embodiment.

In step S1, the controller 130 supplies power from the power supply unit 30 to the cell main unit 11 to raise the temperature inside the housing space 21 of the hot box 20 to a temperature suitable for water electrolysis. At this time, the controller 130 controls first pressure adjusting unit 60 to shut off first supply line L1, controls the second pressure adjusting unit 80 to shut off the second supply line L2, and controls the backpressure adjusting unit 110 to shut off the second discharge line M2.

Furthermore, if the hydrogen electrode 14 contains a metal catalyst such as nickel (Ni), a reduction treatment is performed on the hydrogen electrode 14 by supplying a reducing gas (for example, hydrogen) to the hydrogen electrode chamber 12. This reduction treatment may be performed at the same time as step S1, or may be performed between steps S1 and S2. The reducing gas is supplied to the hydrogen electrode chamber 12 via a startup hydrogen supply line (not shown).

In step S2, the controller 130 supplies water vapor to the hydrogen electrode chamber 12 and air to the oxygen electrode chamber 13 by controlling the first pressure adjusting unit 60 and the second pressure adjusting unit 80, while adjusting the pressure difference between the first pressure in the hydrogen electrode chamber 12 and the second pressure in the oxygen electrode chamber 13 to a value at or below a predetermined value.

Step S2 includes step S21, which corresponds to the startup of the electrolytic cell 10, step S22, which corresponds to steady-state operation of the electrolytic cell 10, and step S23, which corresponds to the shutdown of the electrolytic cell 10.

In step S21, the controller 130 controls the first pressure adjusting unit 60 to raise the first pressure in the hydrogen electrode chamber 12 from atmospheric pressure to the first target pressure, and simultaneously controls the second pressure adjusting unit 80 to raise the second pressure in the oxygen electrode chamber 13 from atmospheric pressure to the second target pressure. At this time, the controller 130 adjusts the pressure difference between the first pressure and the second pressure to a value at or below a predetermined value by controlling at least the first pressure adjusting unit 60 and the second pressure adjusting unit 80.

In step S22, the controller 130 controls the first pressure adjusting unit 60 to keep the first pressure in the hydrogen electrode chamber 12 at the first target pressure, and controls the second pressure adjusting unit 80 to keep the second pressure in the oxygen electrode chamber 13 at the second target pressure. In doing so, the controller 130 adjusts the pressure difference between the first pressure and the second pressure to a value at or below a predetermined value by controlling at least the first pressure adjusting unit 60 and the second pressure adjusting unit 80.

In step S23, the controller 130 controls the first pressure adjusting unit 60 to lower the first pressure in the hydrogen electrode chamber 12 from the first target pressure to atmospheric pressure, and simultaneously controls the second pressure adjusting unit 80 to lower the second pressure in the oxygen electrode chamber 13 from the second target pressure to atmospheric pressure. At this time, the controller 130 makes adjustments to keep the pressure difference between the first pressure and the second pressure at a value at or below a predetermined value by controlling at least the first pressure adjusting unit 60 and the second pressure adjusting unit 80.

### (Application to Metal-Supported Cell Main Body 11)

An electrolytic cell 10 provided with a metal-supported cell main unit 11 will now be described.

FIG. 3 is a cross-sectional view showing the internal configuration of the hot box 20. In FIG. 3, the components identical to those in in FIG. 1 are denoted by the same reference numbers.

### [Hot Box 20]

The electrolytic cell 10 is housed inside a housing space 21 inside the hot box 20. The hot box 20 is provided with an inlet 20a and an outlet 20b. The inlet 20a and the outlet 20b each open into the housing space 21. The inlet 20a connects to the second supply line L2. The outlet 20b connects to a second discharge line M2.

### [Electrolytic Cell 10]

The electrolytic cell 10 includes a housing 5, a metal support 6, and a cell main unit 11.

### [Housing 5]

The housing 5 accommodates the cell main unit 11. A hydrogen electrode chamber 12 and an oxygen electrode chamber 13 are provided inside the housing 5. The hydrogen electrode chamber 12 and the oxygen electrode chamber 13 are separated by the metal support 6 and the cell main unit 11.

The housing 5 is provided with a first inlet 5a, a first outlet 5b, a second inlet 5c, and a second outlet 5d. The first inlet 5a and the first outlet 5b each open into the hydrogen electrode chamber 12. The first inlet 5a connects to the first supply line L1. The first outlet 5b connects to the first discharge line M1. The second inlet 5c and the second outlet 5d each open into the oxygen electrode chamber 13. The second inlet 5c and the second outlet 5d each connect to the housing space 21 inside the hot box 20.

### [Metal Support 6]

The metal support 6 supports the cell main unit 11. The metal support 6 is formed with a plate-like shape. The metal support 6 may be flat or curved.

The metal support 6 only has to be able to support the cell main unit 11, and there are no particular restrictions on its thickness, which may be, for example, 0.1 mm or more and 2.0 mm or less.

As shown in FIG. 3, the metal support 6 has a plurality of through holes 6a, a first main surface 6b, and a second main surface 6c.

Each through hole 6a penetrates the metal support 6 from the first main surface 6b to the second main surface 6c. Each through hole 6a opens onto both the first main surface 6b and the second main surface 6c. In the present embodiment, the opening of each through hole 6a on the first main surface 6b side is covered by the hydrogen electrode 14. The opening of each through hole 6a on the second main surface 6c side is connected to the hydrogen electrode chamber 12.

Each through hole 6a may be formed by machining (such as punching), laser processing, or chemical processing (such as etching).

As shown in FIG. 1, each through hole 6a is preferably formed in a straight line in the Z-axis direction. This allows the surface area of the through holes 6a to be reduced compared to when they are formed in a mesh pattern, and this suppresses oxidation of the metal material constituting the metal support 6 due to heat treatment performed during production of the cell main unit 7. Note that the Z-axis direction is the direction perpendicular to the first main surface 6b. The Z-axis direction is the "thickness direction" of the metal support in the present invention.

Alternatively, each through hole 6a may be inclined relative to the Z-axis direction and does not have to be straight. The through holes 6a may also be connected to one another.

The first main surface 6b is provided on the opposite side of the second main surface 6c. The cell main unit 11 is arranged on the first main surface 6b.

The metal support 6 is made of a metal material. The metal support 6 can be, for example, made of an alloy material containing Cr (chromium). Examples of such metallic materials include Fe-Cr alloy steels (such as stainless steel) and Ni-Cr alloy steels. There are no particular restrictions on the Cr content of the metal support 6, which may be set, for example, to 4 mass% or more and 30 mass% or less.

The metal support 6 may contain Ti (titanium) or Zr (zirconium). There are no particular restrictions on the Ti content of the metal support 6, which may be set, for example, to 0.01 mol% or more and 1.0 mol% or less. There are no particular restrictions on the Al content of the metal support 6, which may be set, for example, to 0.01 mol% or more and 0.4 mol% or less. The metal support 6 may contain Ti in the form of TiO₂ (titania) or Zr in the form of ZrO₂ (zirconia).

The metal support 6 may have an oxide film formed on its surface by oxidizing the constituent elements of the metal support 6. A chromium oxide film is one example of such an oxide film. The oxide film covers at least a portion of the surface of the metal support 6. The oxide film may cover at least a portion of the inner wall surface of each through hole 6a.

### [Cell Main Body 11]

The cell main unit 11 is disposed on the metal support 6. The cell main unit 11 is supported by the metal support 6. The cell main unit 11 includes a hydrogen electrode 14 (cathode), an oxygen electrode 15 (anode), an electrolyte 16, a reaction-preventing layer 17, and a current collector 18.

The hydrogen electrode 14, the electrolyte 16, the reaction-preventing layer 17, the oxygen electrode 15, and the current collector 18 are stacked in this order on the side with the metal support 6 in the Z-axis direction. The hydrogen electrode 14, the oxygen electrode 15, the electrolyte 16, and the current collector 18 are essential components, while the reaction-preventing layer 17 is an optional component.

The hydrogen electrode 14 is formed on the first main surface 6b of the metal support 6. In the present embodiment, the hydrogen electrode 14 covers each through hole 6a of the metal support 6. A portion of the hydrogen electrode 14 may extend into the interior of each through hole 6a of the metal support 6.

Feedstock gas containing at least water vapor is supplied to the hydrogen electrode 14 from the hydrogen electrode chamber 12 via each through hole 6a.

When the feedstock gas contains only water vapor, the hydrogen electrode 14 generates hydrogen from the feedstock gas in accordance with the electrochemical reaction for water electrolysis shown in Equation (1) below.

· Hydrogen electrode 14:

   H₂O + 2^{e-} → H₂ + O²⁻ ... (1)

The hydrogen electrode 14 is a conductive porous material. The hydrogen electrode 14 has gas permeability. Feedstock gas is supplied to the hydrogen electrode 14 through each through hole 6a. The hydrogen electrode 14 discharges the gas generated internally into each through hole 6a.

The hydrogen electrode 14 contains a conductive material. A metal material such as nickel (Ni) or iron (Fe), or a conductive ceramic material, may be used as the conductive material.

When the conductive material consists of a metallic material, the conductive material is present in the form of an oxide (such as NiO) in an oxidizing atmosphere and in the form of a metal (such as Ni) in a reducing atmosphere.

The hydrogen electrode 14 is made of an oxide ion-conductive material. Oxide ion-conducting materials include YSZ, CSZ, ScSZ, GDC, SDC, (La, Sr)(Cr, Mn)O₃, (La, Sr)TiO₃, Sr₂(Fe, Mo)₂O₆, (La, Sr)VO₃,(La, Sr)FeO₃, LDC, LSGM, and mixtures combining two or more of these materials.

In the present embodiment, the hydrogen electrode 14 has a single-layer structure made of a single composition, but it may also be a multi-layer structure made of different compositions.

There are no particular restrictions on the thickness of the hydrogen electrode 14, which may be, for example, 1 µm or more and 500 µm or less.

There are no particular restrictions on the method used to form the hydrogen electrode 14, and methods that can be used include sintering, spray coating (thermal spraying, aerosol deposition, aerosol gas deposition, powder jet deposition, particle jet deposition, cold spraying, etc.), PVD (sputtering, pulsed laser deposition, etc.), and CVD.

The electrolyte 16 is disposed between the hydrogen electrode 14 and the oxygen electrode 15. In the present embodiment, because a reaction-preventing layer 17 is positioned between the electrolyte 16 and the oxygen electrode 15, the electrolyte 16 is interposed between the hydrogen electrode 14 and the reaction-preventing layer 17.

The electrolyte 16 covers the hydrogen electrode 14 and is connected to the region of the first main surface 6b of the metal support 6 that is exposed from the hydrogen electrode 14.

The electrolyte 16 transmits oxygen ions generated at the hydrogen electrode 14 toward the oxygen electrode 15. The electrolyte 16 is composed of a dense material with oxide ion conductivity. The electrolyte 16 may be composed of, for example, YSZ (yttria-stabilized zirconia, such as 8YSZ), GDC (gadolinium-doped ceria), ScSZ (scandium-stabilized zirconia), or SDC (samarium-doped ceria), LSGM (lanthanum gallate).

There are no particular restrictions on the porosity of the electrolyte 16, which may be, for example, 0.1% or more and 7% or less. There are no particular restrictions on thickness of the electrolyte 16, which may be, for example, 1 µm or more and 100 µm or less.

There are no particular restrictions on the method used to form the electrolyte 16, and methods that may be used include sintering, spray coating, PVD, and CVD.

The reaction-preventing layer 17 is disposed between the electrolyte 16 and the oxygen electrode 15. The reaction-preventing layer 17 is positioned on the opposite side of the hydrogen electrode 14 relative to the electrolyte 16. The reaction-preventing layer 17 suppresses the formation of a layer with high electrical resistance that results from the constituent elements of the electrolyte 16 reacting with the constituent elements of the oxygen electrode 15.

The reaction-preventing layer 17 is composed of an oxide ion-conductive material. The reaction suppression layer 17 may be composed of GDC, SDC, etc.

There are no particular restrictions on the porosity of the reaction-preventing layer 17, which may be, for example, 0.1% or more and 50% or less. There are no particular restrictions on the thickness of the reaction-preventing layer 17, which may be, for example, 1 µm or more and 50 µm or less.

There are no particular restrictions on the method used to form the reaction-preventing layer 17, and methods that may be used include sintering, spray coating, PVD, and CVD.

The oxygen electrode 15 is positioned on the opposite side of the hydrogen electrode 14 relative to the electrolyte 16. In the present embodiment, because a reaction-preventing layer 17 is disposed between the electrolyte 16 and the oxygen electrode 15, the oxygen electrode 15 is connected to the reaction-preventing layer 17. If no reaction-preventing layer 17 is provided between the electrolyte 16 and the oxygen electrode 15, the oxygen electrode 15 is connected to the electrolyte 16.

The oxygen electrode 15 generates oxygen from oxygen ions transferred from the hydrogen electrode 14 via the electrolyte 16, according to the chemical reaction shown in Equation (2) below.

· Oxygen electrode 15:

   2O²⁻ → O₂ + 4e⁻ ... (2)

The oxygen electrode 15 is a porous material possessing oxide ion conductivity and electrical conductivity. The oxygen electrode 15 may be a composite material containing one or more of, for example, (La, Sr)(Co, Fe)O₃, (La, Sr)FeO₃, La(Ni, Fe)O₃, (La, Sr)CoO₃, and (Sm, Sr)CoO₃).

There are no particular restrictions on the porosity of the oxygen electrode 15, which may be, for example, 20% or more and 60% or less. There are no particular restrictions on the thickness of the oxygen electrode 15, which may be, for example, 1 µm or more and 100 µm or less.

There are no particular restrictions on the method used to form the oxygen electrode 15, and methods that may be used include sintering, spray coating, PVD, and CVD.

The current collector 18 is disposed on the oxygen electrode 15. The current collector 18 is composed of a conductive material. A metal material such as nickel or iron, or a conductive ceramic material, may be used as the conductive material.

The current collector member 18 is gas-permeable. The current collector member 18 is mesh-like or porous. The current-collecting member 18 makes partial contact with the oxygen electrode 15 in a dot-like or an island-like manner.

The current collector member 18 may be bonded to the oxygen electrode 15 using a conductive bonding material. A metal paste containing a metallic element may be used as conductive bonding material.

### [Control Method for Electrolytic System 1]

The control method used for an electrolytic cell system 1 in which the electrolytic cell 10 is provided with a metal-supported cell main unit 11 will now be described with reference to FIG. 2.

When the cell main unit 11 has a metal-supported configuration, in step S2 of FIG. 2, the second target pressure for the second pressure in the oxygen electrode chamber 13 is preferably higher than the first target pressure for the first pressure in the hydrogen electrode chamber 12. This keeps the oxygen electrode 15 from being pressed against the current collector 18, suppressing the concentration of force at the contact point between the oxygen electrode 15 and the current collector 18. As a result, damage to the oxygen electrode 15 (such as cracking or chipping) can be suppressed.

### 2. Second Embodiment

### (Electrolytic Cell System 2)

FIG. 4 is a block diagram showing the electrolytic cell system 2 in the second embodiment.

This electrolytic cell system 2 includes an electrolytic cell 10, a hot box 20, a power supply unit 30, a water storage unit 40, a boiler 50, a first pressure adjusting unit 60, a high-pressure reactor 90, a first pressure gauge 100, a backpressure adjusting unit 110, a second pressure gauge 120, and a controller 130.

This electrolytic cell system 2 differs from the electrolytic cell system 1 in the first embodiment in that it does not include a compressor 70, a second pressure adjusting unit 80, or a second supply line L2.

Because the electrolytic cell system 2 does not include an air supply mechanism, the energy required to operate the compressor and heat the air can be reduced. As a result, the overall energy efficiency of the electrolytic cell system 2 can be improved. Also, because air is not supplied to the oxygen electrode chamber 13, the oxygen-containing discharge gas discharged from the oxygen electrode chamber 13 contains essentially only oxygen. As a result, pure oxygen can be easily obtained.

The following describes the main differences from the first embodiment.

The controller 130 controls the electrolytic cell system 2. The controller 130 controls the first pressure adjusting unit 60 and the backpressure adjusting unit 110. The controller 130 can adjust the first pressure inside the hydrogen electrode chamber 12 by controlling the first pressure adjusting unit 60. The controller 130 can adjust the second pressure inside the oxygen electrode chamber 13 by controlling the back pressure adjusting unit 110.

The controller 130 adjusts the pressure difference between the first pressure and the second pressure to a value at or below a predetermined value by controlling the first pressure adjusting unit 60 and the backpressure adjusting unit 110. Thus, in the present embodiment, since the electrolytic cell system 2 does not include an air supply mechanism, the controller 130 can adjust the pressure difference between the first pressure and the second pressure by controlling the first pressure adjusting unit 60 and the back pressure adjusting unit 110. This keeps the cell main unit 11 from warping in the direction of the hydrogen electrode chamber 12 or the oxygen electrode chamber 13, thereby preventing damage (such as cracking or chipping) to the electrolyte 16 caused by this warping.

The controller 130 preferably keeps the pressure difference between the first pressure and the second pressure at 1.5 atm or less. This reliably prevents damage to the electrolyte 16 when using a well-known cell main unit 11.

As described in the first embodiment above, the controller 130 preferably adjusts the pressure difference between the first pressure and the second pressure to a value at or below a predetermined value during at least one of the startup, steady-state operation, and shutdown periods of the electrolytic cell 10. When the cell main unit 11 has a metal-supported configuration, the second target pressure for the second pressure in the oxygen electrode chamber 13 is preferably higher than the first target pressure for the first pressure in the hydrogen electrode chamber 12.

### (Control Method for the Electrolytic Cell System 2)

Next, the control method for the electrolytic cell system 2 will be described. FIG. 5 is a flowchart showing the control method for the electrolytic cell system 2 in the second embodiment.

In step S1a, the controller 130 supplies power from the power supply unit 30 to the cell main unit 11, raising the temperature inside the housing space 21 inside the hot box 20 to a temperature suitable for water electrolysis. At this time, the controller 130 controls the first pressure adjusting unit 60 to shut off the first supply line L1 and controls the backpressure adjusting unit 110 to shut off the second discharge line M2.

In step S2a, the controller 130 controls the first pressure adjusting unit 60 and the backpressure adjusting unit 110 to supply feedstock gas to the hydrogen electrode chamber 12 while adjusting the pressure difference between the first pressure inside the hydrogen electrode chamber 12 and the second pressure inside the oxygen electrode chamber 13 to a value at or below a predetermined value.

Step S2a includes step S21a, which corresponds to the startup of the electrolytic cell 10, step S22a, which corresponds to steady-state operation of the electrolytic cell 10, and step S23a, which corresponds to the shutdown of the electrolytic cell 10.

In step S21a, the controller 130 controls the first pressure adjusting unit 60 to raise the first pressure inside the hydrogen electrode chamber 12 from atmospheric pressure to the first target pressure, and simultaneously controls the backpressure adjusting unit 110 to raise the second pressure inside the oxygen electrode chamber 13 from atmospheric pressure to the second target pressure. The controller 130 gradually increases the first pressure inside the hydrogen electrode chamber 12 in response to the rise in the second pressure inside oxygen electrode chamber 13 due to oxygen generation. At this time, the controller 130 adjusts the first pressure and second pressure by controlling the first pressure adjusting unit 60 and the back pressure adjusting unit 110 so that the pressure difference between the first pressure and second pressure is kept at a value at or below a predetermined value.

In step S22a, the controller 130 controls the first pressure adjusting unit 60 to keep the first pressure inside the hydrogen electrode chamber 12 at the first target pressure, and controls the backpressure adjusting unit 110 to keep the second pressure inside the oxygen electrode chamber 13 at the second target pressure. In doing so, the controller 130 adjusts the first pressure and second pressure by controlling the first pressure adjusting unit 60 and the backpressure adjusting unit 110 so that the pressure difference between the first pressure and second pressure is kept at a value at or below a predetermined value.

In step S23a, the controller 130 controls the pressure adjusting unit 60 to lower the first pressure inside the hydrogen electrode chamber 12 from the first target pressure to atmospheric pressure, and simultaneously controls the backpressure adjusting unit 110 to lower the second pressure inside the oxygen electrode chamber 13 from the second target pressure to atmospheric pressure. In doing so, the controller 130 adjusts the pressure difference between the first pressure and the second pressure to a value at or below a predetermined value by controlling the pressure adjusting unit 60 and the backpressure adjusting unit 110.

### 3. Third Embodiment

### (Electrolytic Cell System 3)

FIG. 6 is a block diagram showing the electrolytic cell system 3 in the third embodiment.

The electrolytic cell system 3 includes an electrolytic cell 10, a hot box 20, a power supply unit 30, a water storage unit 40, a boiler 50, a high-pressure reactor 90, a backpressure adjusting unit 110, a second pressure gauge 120, a controller 130, and a third pressure gauge 140 (one example of a "pressure gauge").

The electrolytic cell system 3 differs from the electrolytic cell system 2 in the second embodiment in that it is equipped with a third pressure gauge 140 instead of the first pressure adjusting unit 60 described above, and in that it does not include a first pressure gauge 100.

The following describes the basic differences from the second embodiment.

The third pressure gauge 140 is positioned in the first supply line L1. The third pressure gauge 140 is located downstream of the boiler 50. The third pressure gauge 140 measures the pressure of the feedstock gas supplied to the hydrogen electrode chamber 12.

The controller 130 detects the first pressure inside the hydrogen electrode chamber 12 based on the measurement value from the third pressure gauge 140. When detecting the first pressure, the controller 130 preferably corrects the measurement value of the third pressure gauge 140 based on the temperature difference with the hydrogen electrode chamber 12 and the pressure loss inside the hydrogen electrode chamber 12.

The controller 130 can adjust the second pressure inside the oxygen electrode chamber 13 by controlling the backpressure adjusting unit 110.

The controller 130 adjusts the pressure difference between the first pressure and the second pressure to a value at or below a predetermined value by controlling the backpressure adjusting unit 110 based on the measurement value from the third pressure gauge 140. Thus, in the present embodiment, since the electrolytic cell system 3 does not include a first pressure adjusting unit 60, the controller 130 can adjust the pressure difference between the first pressure and the second pressure by controlling the back pressure adjusting unit 110 in response to fluctuations in the first pressure inside the hydrogen electrode chamber 12. This suppresses warping of the cell main unit 11 in the direction of either the hydrogen electrode chamber 12 or the oxygen electrode chamber 13, thereby preventing damage to the electrolyte 16 (such as cracking or chipping) caused by warping.

The controller 130 preferably keeps the pressure difference between the first pressure and the second pressure at 1.5 atm or less. This reliably prevents damage to the electrolyte 16 when using a well-known cell main unit 11.

As described in the first embodiment above, the controller 130 preferably adjusts the pressure difference between the first pressure and the second pressure to a value at or below a predetermined value during at least one of the startup, steady-state operation, and shutdown periods of the electrolytic cell 10. Also, when the cell main unit 11 has a metal-supported configuration, the second target pressure for the second pressure inside the oxygen electrode chamber 13 is preferably higher than the first target pressure for the first pressure in the hydrogen electrode chamber 12.

### (Control Method for the Electrolytic Cell System 3)

Next, the control method for the electrolytic cell system 3 will be described. FIG. 7 is a flowchart showing the control method for the electrolytic cell system 3 in the third embodiment.

In step S1b, the controller 130 supplies power from the power supply unit 30 to the cell main body 11, raising the temperature inside housing space 21 inside the hot box 20 to a temperature suitable for water electrolysis. At this time, the controller 130 controls the water storage unit 40 or the boiler 50 to stop the supply of feedstock gas, and simultaneously controls the backpressure adjusting unit 110 to shut off the second discharge line M2.

In step S2b, the controller 130 adjusts the second pressure inside the oxygen electrode chamber 13 by controlling the backpressure adjusting unit 110 in response to the first pressure inside the hydrogen electrode chamber 12, as detected based on the measurement value of the third pressure gauge 140, while supplying feedstock gas to the hydrogen electrode chamber 12. In doing so, the controller 130 adjusts the pressure difference between the first pressure and the second pressure to a value at or below a predetermined value.

### (Modified Examples of the Embodiments)

Embodiments of the present invention were described above, but note that the present invention is not limited to these embodiments, and various modifications are possible as long as they do not depart from the scope and spirit of the present invention.

### [Modified Example 1]

In the first embodiment through third embodiment described above, the feedstock gas contained water vapor, but the feedstock gas may also contain carbon dioxide in addition to water vapor. When the feedstock gas contains water vapor and carbon dioxide, the hydrogen electrode 14 generates hydrogen, carbon monoxide, and oxygen ions from the feedstock gas from the co-electrolysis electrochemical reactions shown in Equations (3), (4), and (5) below.

· Hydrogen electrode 14:

   CO₂+ H₂O + 4^{e-}→ CO + H₂ + 2O²⁻... (3)
· Electrochemical reaction of H₂O:

   H₂O + 2^{e-}→ H₂ + O²⁻... (4)
· Electrochemical reaction of CO₂:

   CO₂ + 2^{e-}→ CO + O²⁻... (5)

In co-electrolysis, the Ni in the hydrogen electrode 14 functions as a thermal catalyst that promotes a thermal reaction between the generated hydrogen and the carbon dioxide in the feedstock gas, thereby maintaining a gas composition suitable for methanation and reverse water-gas shift reactions.

In co-electrolysis, the hydrogen-containing discharge gas discharged from the hydrogen electrode chamber 12 contains hydrogen and carbon monoxide. The hydrogen-containing discharge gas may contain water vapor and carbon dioxide that were not consumed at the hydrogen electrode 14. The carbon monoxide and carbon dioxide in the hydrogen-containing discharge gas may be used as a carbon source in the high-pressure reactor 90.

In co-electrolysis, a separate storage unit is required to supply carbon dioxide, one of the feedstock gases, to the first supply line L1. Carbon dioxide is supplied to the first supply line L1 upstream of the first pressure adjusting unit 60.

### [Modified Example 2]

In the first embodiment to the third embodiments described above, a backpressure adjusting unit may be provided in the first discharge line M1 to adjust the backpressure of the hydrogen-containing discharge gas discharged from the hydrogen electrode chamber 12. This backpressure adjusting unit is arranged upstream of the high-pressure reactor 90. This allows the back pressure of the hydrogen-containing discharge gas discharged from the hydrogen electrode chamber 12 to be adjusted regardless of the pressure inside the high-pressure reactor 90, enabling the first pressure inside the hydrogen electrode chamber 12 to be adjusted more easily.

### [Modified Example 3]

In the first embodiment and the second embodiment described above, the first pressure gauge 100 was arranged in the first discharge line M1, but the present invention is not limited to this configuration. The first pressure gauge 100 may also be positioned in the first supply line L1.

### [Modified Example 4]

In the first embodiment described above, the second pressure gauge 120 is arranged in the second discharge line M2, but the present invention is not limited to this configuration. The second pressure gauge 120 may also be positioned in the second supply line L2.

### [Modified Example 5]

In the second embodiment and the third embodiment described above, the electrolytic cell system was configured not to include an air supply mechanism (a compressor 70, a second pressure adjusting unit 80, and a second supply line L2), but it may include an air supply mechanism. In this case, the second pressure in the oxygen electrode chamber 13 may be adjusted by controlling the second pressure adjusting unit 80.

### [Modified Example 6]

As shown in FIG. 3, the hydrogen electrode 14 is arranged directly on the first main surface 6b of the metal support 6. However, a bonding layer may be interposed between the first main surface 6b of the metal support 6 and the hydrogen electrode 14. The bonding layer may be made of a material listed among the constituent materials of the hydrogen electrode 14, and may have a smaller particle size than used in the hydrogen electrode 14.

### Examples

Examples of the present invention will now be described. Note that the present invention is not limited to the examples described below.

First, three types of electrolytic cells 10 were prepared, namely, metal-supported, hydrogen electrode-supported, and electrolyte-supported cells. The configuration of the cell main unit 11 (8 cm × 8 cm) was as shown in Table 1.

**[Table 1]**

| | Oxygen Electrode | Reaction Preventing Layer | Electrolyte | Hydrogen Electrode | Support |
|---|---|---|---|---|---|
| Matal Support Type | LSCF | GDC | 8YSZ | Ni-YSZ | Stainless Steel |
| Hydrogen Electrode Support Type | LSCF | GDC | 8YSZ | Ni-YSZ | (Hydrogen Electrode) |
| Electrolyte Support Type | LSCF | GDC | 3YSZ | Ni-YSZ | (Electrolyte) |

Next, each prepared electrolytic cell 10 was placed inside a hot box 20 and heated to 700°C. Then, the NiO in the hydrogen electrode 14 was reduced to Ni by supplying air to the oxygen electrode chamber 13 and hydrogen gas to the hydrogen electrode chamber 12.

Next, water vapor was supplied to the hydrogen electrode chamber 12, and while maintaining the pressure difference between the first pressure inside the hydrogen electrode chamber 12 and the second pressure inside the oxygen electrode chamber 13 at 0.05 atm or less, one of the two pressures was increased to 1 atm, 2 atm, and 3 atm. With one pressure fixed at 1 atm, 2 atm, or 3 atm, the other pressure was increased at a rate of 0.05 atm/min, and the pressure difference between the first pressure and second pressure at the point of electrolyte breakdown was recorded.

This test was performed three times on each electrolytic cell 10, and the average pressure difference at the time of electrolyte breakdown was calculated as the breakdown pressure difference. The results are summarized in Table 2.

As shown in Table 2, the minimum pressure difference at breakdown for the metal-supported electrolytic cell 10 was 1.9, the minimum pressure difference at breakdown for the hydrogen electrode-supported electrolytic cell 10 was 1.55, and the minimum pressure difference at breakdown for the electrolyte-supported electrolytic cell 10 was 1.8. It was clear from these results that regardless of the type of electrolytic cell 10, electrolyte breakdown can be prevented if the pressure difference between the first pressure and the second pressure is 1.5 atm or less.

Also, as shown in Table 2, in the metal-supported type electrolytic cell 10, the pressure difference at breakdown was greater when the second pressure was higher than the first pressure than when the first pressure was higher than the second pressure. These results were obtained because keeping the oxygen electrode 15 from being pressed against the current collector 18 prevented a concentration of force at the contact point between the oxygen electrode 15 and the current collector 18. It was clear from this that in a metal-supported electrolytic cell 10, the second pressure inside the oxygen electrode chamber 13 is preferably kept higher than the first pressure inside the hydrogen electrode chamber 12.

**[Table 2]**

| | | | | |
|---|---|---|---|---|
| | First Pressure | Second Pressure | Pressure Difference | Minimum Pressure Difference at Breakdown |
| Metal Support | 1 (Fixed) | 3.45 | 2.45 | 1.9 |
| | 2 (Fixed) | 4.3 | 2.3 | |
| | 3 (Fixed) | 5.3 | 2.3 | |
| | 3.05 | 1 (Fixed) | 2.05 | |
| | 4 | 2 (Fixed) | 2 | |
| | 4.9 | 3 (Fixed) | 1.9 | |
| Hydrogen Electrode Support | 1 (Fixed) | 2.8 | 1.8 | 1.55 |
| | 2 (Fixed) | 3.75 | 1.75 | |
| | 3 (Fixed) | 4.55 | 1.55 | |
| | 2.9 | 1 (Fixed) | 1.9 | |
| | 3.9 | 2 (Fixed) | 1.9 | |
| | 4.6 | 3 (Fixed) | 1.6 | |
| Electrolyte Support | 1 (Fixed) | 2.85 | 1.85 | 1.8 |
| | 2 (Fixed) | 3.8 | 1.8 | |
| | 3 (Fixed) | 4.8 | 1.8 | |
| | 2.9 | 1 (Fixed) | 1.9 | |
| | 3.85 | 2 (Fixed) | 1.85 | |
| | 4.8 | 3 (Fixed) | 1.8 | |

### Reference Numbers

1: Electrolytic cell system
5: Housing
6: Metal support
10: Electrolytic cell
11: Cell main unit
14: Hydrogen electrode
15: Oxygen electrode
16: Electrolyte
20: Hot box
21: Housing space
30: Power supply unit
40: Water storage unit
50: Boiler
60: First pressure adjusting unit
70: Compressor
80: Second pressure adjusting unit
90: High-pressure reactor
100: First pressure gauge
110: Backpressure adjusting unit
120: Second pressure gauge
130: Controller

## Claims

1. An electrolytic cell system, comprising:
an electrolytic cell having a hydrogen electrode chamber into which feedstock gas containing water vapor is supplied, an oxygen electrode chamber in which oxygen is generated, and an electrolyte disposed between the hydrogen electrode chamber and the oxygen electrode chamber; and
a controller that adjusts the pressure difference between the first pressure in the hydrogen electrode chamber and the second pressure in the oxygen electrode chamber to a value below a predetermined value.

2. The electrolytic cell system according to claim 1, further comprising:
a first supply line that supplies the feedstock gas to the hydrogen electrode chamber;
a second supply line that supplies compressed air to the oxygen electrode chamber;
a first pressure adjusting unit provided in the first supply line that regulates the pressure of the feedstock gas supplied to the hydrogen electrode chamber; and
a second pressure adjusting unit provided in the second supply line that regulates the pressure of the air supplied to the oxygen electrode chamber,
wherein the controller adjusts the pressure difference to a value at or below a predetermined value by controlling the first pressure adjusting unit and the second pressure adjusting unit.

3. The electrolytic cell system according to claim 1, further comprising:
a first supply line that supplies the raw material gas to the hydrogen electrode chamber;
a first pressure adjusting unit provided in the first supply line that regulates the pressure of the feedstock gas supplied to the hydrogen electrode chamber;
a first discharge line that discharges hydrogen-containing exhaust gas from the hydrogen electrode chamber;
a second discharge line that discharges oxygen-containing exhaust gas from the oxygen electrode chamber; and
a backpressure adjusting unit provided in the second discharge line to adjust the backpressure of the oxygen-containing exhaust gas discharged from the oxygen electrode chamber;
wherein the controller adjusts the pressure difference to a value at or below a predetermined value by controlling the first pressure adjusting unit and the backpressure adjusting unit.

4. The electrolytic cell system according to claim 1, further comprising:
a first supply line for supplying the feedstock gas to the hydrogen electrode chamber;
a pressure gauge that measures the pressure of the feedstock gas flowing through the first supply line;
a first discharge line that discharges hydrogen-containing exhaust gas from the hydrogen electrode chamber;
a second discharge line that discharges oxygen-containing exhaust gas from the oxygen electrode chamber; and
a backpressure adjusting unit provided in the second discharge line that adjusts the backpressure of the oxygen-containing exhaust gas discharged from the oxygen electrode chamber,
wherein the controller adjusts the pressure difference to a value at or below a predetermined value by controlling the backpressure adjusting unit based on measurement values from the pressure gauge.

5. The electrolytic cell system according to any of claims 1 to 4, wherein the predetermined value is 1.5 atm.

6. The electrolytic cell system according to any of claims 1 to 4, wherein
the electrolytic cell comprises
a metal support having a plurality of through-holes formed in a main surface, and
a cell main unit disposed on the main surface, and
the cell main unit comprises
a hydrogen electrode and an oxygen electrode disposed on the main surface,
an electrolyte disposed between the hydrogen electrode and the oxygen electrode, and
a current collector disposed on the oxygen electrode.

7. The electrolytic cell system according to claim 6, wherein the controller sets the second pressure higher than the first pressure.

8. The electrolytic cell system according to claim 2, further comprising:
a first discharge line for discharging hydrogen-containing discharge gas from the hydrogen electrode chamber; and
a high-pressure reactor connected to the first discharge line and supplied with the hydrogen -contain in g discharge gas.

9. The electrolytic cell system according to claim 2, further comprising:
a first discharge line for discharging hydrogen-containing discharge gas from the hydrogen electrode chamber; and
a backpressure adjusting unit provided in the first discharge line for adjusting the backpressure of the hydrogen-containing discharge gas discharged from the hydrogen electrode chamber.

10. The electrolytic cell system according to claim 2, further comprising:
a second discharge line that discharges oxygen-containing discharge gas from the oxygen electrode chamber; and
a backpressure adjusting unit provided in the second discharge line that adjusts the backpressure of the oxygen-containing discharge gas discharged from the oxygen electrode chamber.

11. The electrolytic cell system according to claim 3 or 4, further comprising:
a high-pressure reactor connected to the first discharge line and supplied with the hydrogen-containing discharge gas.

12. The electrolytic cell system according to claim 3 or 4, further comprising:
a second supply line for supplying compressed air to the oxygen electrode chamber.

13. A method for controlling an electrolytic cell system comprising an electrolytic cell having a hydrogen electrode chamber into which feedstock gas containing water vapor is supplied, an oxygen electrode chamber in which oxygen is generated, and an electrolyte disposed between the hydrogen electrode chamber and the oxygen electrode chamber, the method comprising the step of:
adjusting the pressure difference between the first pressure in the hydrogen electrode chamber and the second pressure in the oxygen electrode chamber to a value at or below a predetermined value.
